Europäisches Patentamt

European Patent Office

Office européen des brevets

(19)

(11) Publication number : **0 478 453 A1**

(12) # EUROPEAN PATENT APPLICATION

(21) Application number : **91402561.4**

(51) Int. Cl.⁵ : **B60R 25/06**

(22) Date of filing : **25.09.91**

(30) Priority : **28.09.90 IL 95841**

(43) Date of publication of application :
**01.04.92 Bulletin 92/14**

(84) Designated Contracting States :
**AT BE CH DE DK ES FR GB GR IT LI NL SE**

(71) Applicant : **Albo, Nimrod**
**2, Geulei Teiman Street**
**Haifa 34991 (IL)**
(71) Applicant : **Doron, Meier**
**4, Tourchiner Street**
**Tel-Aviv 69973 (IL)**

(72) Inventor : **Albo, Nimrod**
**2, Geulei Teiman Street**
**Haifa 34991 (IL)**
Inventor : **Doron, Meier**
**4, Tourchiner Street**
**Tel-Aviv 69973 (IL)**

(74) Representative : **Hasenrader, Hubert et al**
**Cabinet BEAU DE LOMENIE 55, rue**
**d'Amsterdam**
**F-75008 Paris (FR)**

(54) **Safety device for automatically locking and unlocking the gearshift lever of a motor car.**

(57)   A device for automatically locking the gearshift lever (21) of a motor vehicle during standstill comprises a reciprocating locking member (2) adapted to be moved into gearshift locking position by a battery operated electric drive (5) by means of switch means (13) adapted to energize the drive (5) as soon as the vehicle engine is switched off. Disengaging of the device is caused by key means (10) operated by the driver.

EP 0 478 453 A1

Fig.1

Fig.4

FIELD OF THE INVENTION

The present invention relates to a safety device for preventing theft or otherwise unauthorized driving of a motor car.

BACKGROUND OF THE INVENTION AND PRIOR ART

Israeli patent 69748 discloses an arrangement for preventing motor car theft by locking the gearshift lever to a fixed portion of the motor car, which comprises a padlock body fixedly mounted in the vicinity of the gearshift lever, and a separate padlock yoke adapted to be locked to the padlock body with the stick enclosed between the yoke and the padlock body.

While this known device has proved to be quite useful it has the intrinsic drawback of requiring manual manipulation which puts onto the user an additional onus. Moreover, as the yoke is a separate body it tends occasionally to be mislaid with the consequence that additional time is required for locating it.

It is the object of the present invention to provide an automatic safety device for preventing any unauthorized use of a motor car and being free of any loose components.

GENERAL DESCRIPTION OF THE INVENTION

In accordance with the invention there is provided a safety device for automatically locking and unlocking the gearshift lever of a motor car, comprising:

i) a housing for mounting inside a motor car in the vicinity of the gearshift lever;

ii) an electric drive;

iii) a locking member driven by said drive and having at least one locking bar and being reciprocable between withdrawn, unlocking and an advanced, locking position;

iv) switch means by which when the locking member is in the retracted, unlocking position and the motor car engine is switched off, said electric drive is switched on whereby the locking member is advanced into the locking position;

v) switch means for cutting off said electric drive when the locking member is in the fully advanced , locking position;

vi) key-actuated locking means for actuating said drive when the locking member is in the advanced locking position whereby the locking member is withdrawn into the unlocking position; and

vii) switch means for cutting off said drive when the locking member is fully withdrawn.

The locking member may be provided with two locking bars.

The key for actuating the locking means may be of any suitable design such as a mechanical key, a magnetic card, a remote control device and the like, all known per se.

The locking effect of the safety device according to the invention is brought about by the gearshift lever being confined by the locking bars of the locking member. In operation, each time the motor car engine is switched off the locking member advances automatically into the locking position.

Allowance must be made for the fact that when the engine is switched off the gearshift lever may not be in the "parking" position in case of an automatic gear or in "neutral" in case of a manual shift gear, and consequently the locking member must confine the gearshift lever regardless of the position of the lever at the time when the motor car engine is switched off.

Preferably the safety device according to the invention also comprises a timer which provides for a delay between the switching off of the motor car engine and the switching on of the electric drive of the safety device. In this manner locking of the gearshift lever in case of an inadvertent switch-off of the engine is avoided.

In accordance with one embodiment of the invention the locking of the gearshift lever is achieved exclusively by the advancement of the locking member.

In accordance with another embodiment of the invention a female sealing member is fixedly mounted opposite the housing such that in the fully advanced position of the locking member the end portions of the locking bars are received within said sealing member.

DESCRIPTION OF THE DRAWINGS

For better understanding the invention will now be described, by way of non-limiting example only with reference to the annexed drawings in which:

Fig.1 is a diagrammatic perspective view of a safety device according to the invention;

Figs.2 and 3 are electric wiring diagrams of the safety device according to Fig. 1 in the unlocking and locking positions, respectively; and

Fig.4 is a perspective view of another embodiment of a locking device according to the invention with a female sealing member.

DESCRIPTION OF SPECIFIC EMBODIMENTS

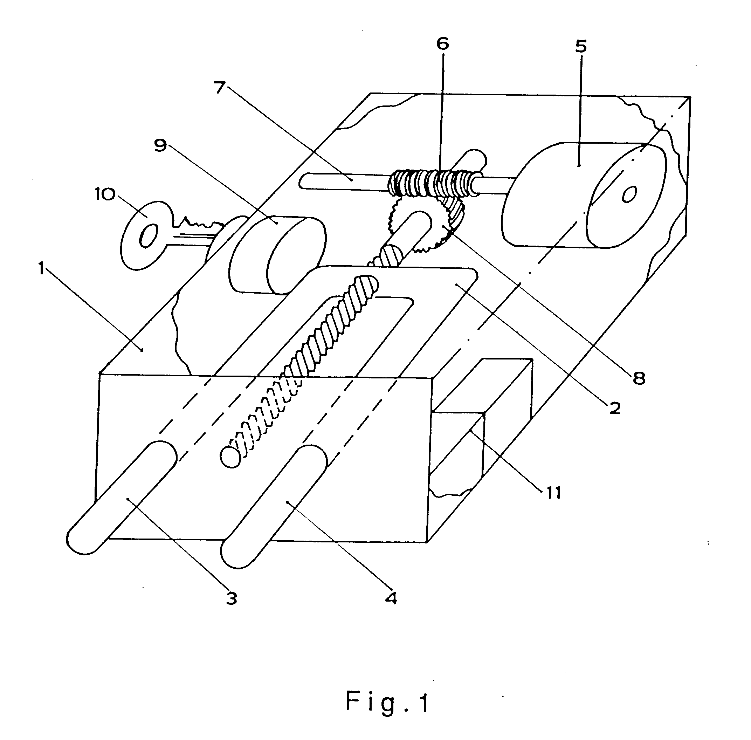

The safety device according to the invention shown in Figs. 1 to 3 comprises a housing 1 holding a locking member 2 having locking bars 3 and 4; an electric drive 5 (for example DC motor); and a gear mechanism comprising a first worm gear 6 keyed on the electric drive shaft 7 and a second, intersecting worm gear 8 integral with the locking member 2. There is further provided a lock 9 operable by means of a mechanical key 10, a relay assembly 11 fitted with relay contacts 12' and 12", and microswitches 13 and 14.

The device further comprises a terminal 15 to which a positive potential is applied from the battery (not shown) when the motor car engine is switched off.

The operation of this safety device is briefly as follows:

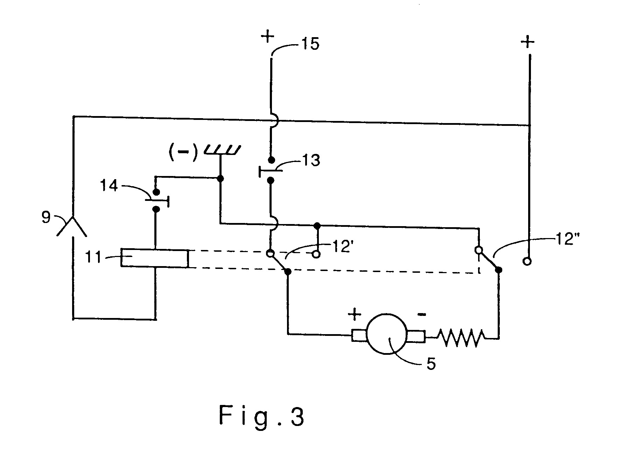

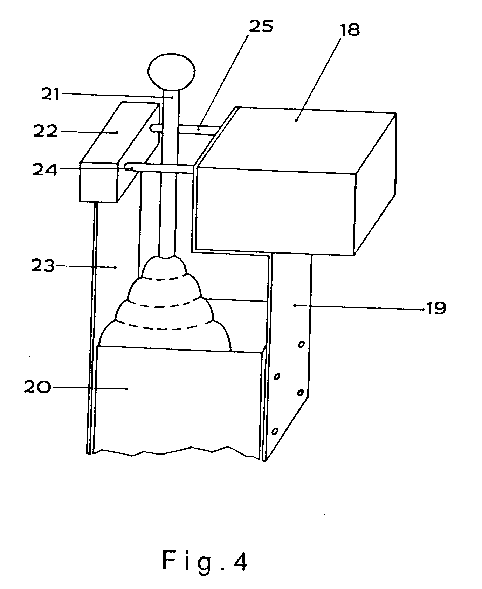

Starting from the locking position shown in Figs. 1 to 3 key 10 is inserted into lock 9 whereby the relay 11 is actuated which biases the relay contacts 12′ and 12″ whereby drive 5 is connected with the polarity as shown in Fig.3. As a result the drive 5 starts to rotate thereby withdrawing locking member 2 into the unlocking position. When locking member 2 is fully withdrawn microswitch 14, which is normally closed, is opened whereby power supply to relay 11 is cut off and in consequence relay contacts 12′ and 12″ reset to their unbiased positions shown in Fig. 4.

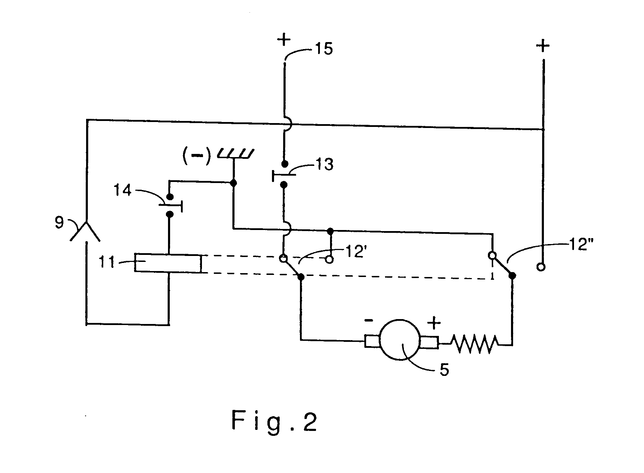

On the position of relay contacts 12′ and 12″ shown in Fig. 2 the polarity of the electric DC drive 5 is reversed. However, the drive is not energized because terminal 15 is normally at zero potential. When now the car engine is switched off, a positive voltage is applied to the terminal 15. Consequently, drive 5 is energized and begins to revolve in the opposite sense than in the position of Fig. 3 whereby the locking member 2 is advanced into the locking position. When the locking member 2 reaches its fully advanced position it opens micros witch 13 thereby interrupting power to drive 5 which latter accordingly stops rotating. The safety device is now in the locking position in which the gearshift lever is immobilized.

For unlocking the device lock 9 is actuated by means of key 10 which re-establishes the position of Fig. 3.

Fig. 4 shows how a safety device according to the invention is mounded inside a car. As shown, a locking device 18 of the kind shown in Figs. 1 to 3 is mounted on a bracket 19 which is connected to the side wall of a bulging floor portion 20 of the car and from which emerges the gearshift lever 21.

Opposite the safety device 18 a female sealing member 22 is mounted on a bracket 23 secured to the opposite side of the bulging floor portion 20.

The two locking arms 24 and 25 of the locking member (corresponding to locking bars 3 and 4 in Figs. 1 and 2) are received in the locking position shown in Fig. 4 by suitable sockets of the female sealing member 22 and in this manner the gearshift lever 21 is locked from all sides.

The female sealing member 22 is optional

**Claims**

1. A safety device for automatically locking and unlocking the gearshift lever (21) of a motor car engine , comprising:
    i) a housing (1) for mounting inside a motor car in the vicinity of the gearshift lever (21);
    ii) an electric drive (5);
    iii) a locking member (21) driven by said electric drive (5) and provided with at least one locking bar and being reciprocable between withdrawn, unlocking and an advanced, locking position;
    iv) switch means (15) adapted to automatically switch on said electric drive (5) for advancing said locking member (21) into locking position as soon as said engine is switched off;
    v) switch means (13) for cutting off said electric drive (5) when the locking member (21) is in the fully advanced, locking position;
    vi) key-actuated locking means (9) for actuating said electric drive (5) when said locking member (2) is in the advanced ,locking position whereby the locking member (2) is withdrawn into the unlocking position; and
    vii) switch means (14) for cutting off said drive (5) when the locking member (2) is fully withdrawn.

2. A safety device according to Claim 1, wherein said locking member (2) is provided with two locking bars (3,4).

3. A safety device according to one of the preceding Claims, wherein said locking means (9) are actuated by a mechanical key (10).

4. A safety device according to Claims 1 to 2, wherein said locking means (9) are actuated by a magnetic card.

5. A safety device according to any of Claims 1 to 2, wherein said locking means (9) are actuated by a remote control.

6. A safety device according to any one of Claims 1 to 5, comprising a timer.

7. A safety device according to any of the preceding Claims further comprising a female sealing member (22) for mounting opposite the locking member (2) so as to receive the end portions of the locking bars (24,25) in the locking position.

Fig.1

Fig. 2

Fig.3

Fig.4

European Patent Office

**EUROPEAN SEARCH REPORT**

Application Number

## DOCUMENTS CONSIDERED TO BE RELEVANT

EP 91402561.4

| Category | Citation of document with indication, where appropriate, of relevant passages | Relevant to claim | CLASSIFICATION OF THE APPLICATION (Int. Cl.5) |
|---|---|---|---|
| A | WO - A1 - 88/04 246 (GILFOYLE) * Fig.; abstract * | 1 | B 60 R 25/06 |
| A | FR - A - 461 369 (CHAILLOU) * Fig. * | 1 | |
| A | US - A - 4 693 099 (CYKMAN) * Fig.; abstract * | 1 | |
| D | & IL-A-69 748 | | |

TECHNICAL FIELDS SEARCHED (Int. Cl.5)

B 60 R

The present search report has been drawn up for all claims

| Place of search | Date of completion of the search | Examiner |
|---|---|---|
| VIENNA | 28-10-1991 | PANGRATZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)